Europäisches Patentamt

European Patent Office

Office européen des brevets

(19)

(11) **EP 1 292 001 A1**

(12) **DEMANDE DE BREVET EUROPEEN**

(43) Date de publication:
**12.03.2003 Bulletin 2003/11**

(51) Int Cl.⁷: **H02J 7/35**

(21) Numéro de dépôt: **02291674.6**

(22) Date de dépôt: **04.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **27.08.2001 FR 0111132**

(71) Demandeur: **ALCATEL**
**75008 Paris (FR)**

(72) Inventeurs:
• **Capel, Antoine**
**31120 Goyrans (FR)**
• **Lecointe, Pascal**
**13380 Plan de Cuques (FR)**

(74) Mandataire: **Smith, Bradford Lee et al**
**Compagnie Financière Alcatel**
**Département de Propriété Industrielle,**
**5, rue Noel Pons**
**92734 Nanterre Cedex (FR)**

(54) **Dispositif de régulation d'énergie éléctrique pour bus d'alimentation**

(57)    La présente invention concerne un dispositif de régulation d'énergie électrique pour un bus d'alimentation (BUS), comprenant :

• une unité de stockage d'énergie électrique (BAT)
• un générateur solaire comprenant une pluralité de cellules (GC1, ..., GCn)
• des moyens de régulation (D1, Q1, AMP1) de la tension d'alimentation bus permettant d'imposer à chaque cellule l'un des trois états suivants :

- un premier état dans lequel le bus (BUS) est alimenté en courant
- un deuxième état dans lequel l'unité de stockage (BAT) est alimentée
- un troisième état dans lequel la cellule est shuntée

les cellules étant réparties par les moyens de régulation (D1, Q1, AMP1) de la tension bus en deux groupes :

- un premier groupe dans lequel au moins une cellule alimente le bus et une cellule est affectée à la régulation de la tension bus et est dans son premier état seulement lorsque le maintien d'une tension nominale de bus requiert un apport de courant
- un deuxième groupe dans lequel au moins une cellule est soit dans son deuxième état, soit dans son troisième état, en fonction d'un niveau de courant de charge requis de l'unité de stockage (BAT), le nombre de cellules dans le deuxième état étant fonction de la valeur de courant de charge requis.

Selon l'invention, le dispositif comprend en outre des moyens de régulation (D2, Q2, AMP2) de la charge de l'unité de stockage (BAT) pour affecter au moins une cellule du deuxième groupe à l'alimentation de l'unité de stockage (BAT) et une cellule de ce dernier à la régulation de la tension de l'unité de stockage, la cellule de régulation de la tension de charge de l'unité de stockage étant dans son deuxième état seulement lorsque le maintien d'une tension nominale de charge requiert un apport de courant.

FIG_3

# Description

La présente invention concerne un dispositif de régulation d'énergie électrique pour bus d'alimentation, plus particulièrement du type utilisé à bord d'un satellite.

A bord d'un satellite, le réseau à alimenter, comprenant principalement la charge utile ainsi que la plate-forme de service du satellite lui-même, est alimenté en énergie à partir de deux sources d'énergie, au moyen d'un bus d'alimentation :

- un générateur solaire (utilisant l'énergie solaire récupérée à partir des panneaux solaires du satellite) qui transforme l'énergie lumineuse en énergie électrique, généralement constitué de plusieurs cellules
- une unité de stockage d'énergie électrique comprenant une ou plusieurs batteries, qui permet d'emmagasiner une partie de l'énergie électrique provenant du générateur solaire et de la transformer en énergie électrochimique qui sera disponible, sous forme électrique, lors des éclipses ou des pointes de consommation.

De manière connue, les bus d'alimentation utilisés à bord des satellites sont régulés à une tension prédéterminée, en général 50 V ou 100 V. Cette régulation permet d'optimiser les performances électriques et massiques des organes électriques du satellite et celles des ressources énergétiques.

Un dispositif connu dispositif de régulation d'énergie électrique pour bus d'alimentation est décrit dans le document FR-2 785 103.

Dans son principe, il consiste à réguler la tension du bus d'alimentation distribuée au réseau au moyen d'une section shunt placée au niveau de chaque cellule du générateur solaire entre cette dernière et le réseau. Cette régulation est assurée grâce à un asservissement dont le signal de commande est distribué simultanément à toutes les cellules. D'autre part, toujours selon le principe de ce dispositif connu, la régulation de la tension de la batterie est assurée par une section série délivrant un courant de charge à la batterie et reliant chaque cellule du générateur d'énergie solaire à cette dernière.

Selon l'art antérieur connu, les deux sections de chaque cellule (celle assurant la régulation de la tension du bus d'alimentation et celle assurant la régulation de la charge de la batterie) ne peuvent opérer simultanément, et une logique empêchant ce fonctionnement simultané contrôle le dispositif.

La régulation de la tension du bus est prioritaire en fonction de la tension d'asservissement. Ainsi, les sections shunt sont soit en position ouverte (énergie transférée au réseau), soit en position fermée (énergie non utilisée donc perdue).

Ce dispositif connu pose un certain nombre de problèmes.

En premier lieu, il ne permet pas d'effectuer une régulation fine de la charge de la batterie selon les procédés classiques de charge des batteries, c'est-à-dire d'effectuer une partie de la charge à courant constant, et une autre (la fin de la charge) à tension constante, c'est-à-dire à courant variable.

En outre, il fait intervenir l'ordinateur de bord du satellite pour choisir les cellules qui vont contrôler le dispositif de régulation de la charge de la batterie et notamment empêcher le fonctionnement simultané des deux sections de chacune des cellules. L'ordinateur étant lui-même alimenté par le bus d'alimentation, un tel dispositif ne peut être réellement fiable et manque d'autonomie.

La présente invention a donc pour objet de mettre au point un dispositif de régulation d'énergie électrique pour bus d'alimentation qui soit capable de fonctionner de manière autonome à bord d'un satellite, notamment sans avoir recours à l'ordinateur de bord de ce dernier, et qui en outre permette d'optimiser l'énergie utilisée à bord du satellite de manière à autoriser une régulation fine de la charge de la batterie et de la tension du bus.

La présente invention propose à cet effet un dispositif de régulation d'énergie électrique pour un bus d'alimentation relié à un réseau d'utilisation de ladite énergie électrique, ledit dispositif comprenant :

- une unité de stockage d'énergie électrique
- un générateur solaire comprenant une pluralité de cellules
- pour chacune desdites cellules, des moyens de régulation de la tension d'alimentation dudit bus permettant d'imposer à ladite cellule l'un des trois états de fonctionnement suivants :

  - un premier état dans lequel le courant de ladite cellule alimente ledit bus
  - un deuxième état dans lequel le courant de ladite cellule alimente ladite unité de stockage
  - un troisième état dans lequel ladite cellule est shuntée

  lesdites cellules étant réparties par lesdits moyens de régulation de la tension du bus en au moins deux groupes:

  - un premier groupe dans lequel au moins l'une desdites cellules alimente ledit bus et l'une desdites cellules, dite cellule de régulation de la tension du bus, est affectée à la régulation de la tension dudit bus et est à cet effet dans son premier état seulement lorsque le maintien d'une tension dite nominale de bus requiert un apport de courant à partir de ladite cellule
  - un deuxième groupe dans lequel au moins l'une desdites cellules est soit dans son deuxième état, soit dans son troisième état, en fonction d'un niveau de courant de charge requis de ladite unité de stockage, le nombre de cellules dans le deuxième état étant fonction de la valeur de courant de charge requis

**caractérisé en ce que** chacune desdites cellules comprend en outre des moyens de régulation de la charge de ladite unité de stockage pour affecter, parmi lesdites cellules dudit deuxième groupe, au moins l'une desdites cellules à l'alimentation de ladite unité de stockage et l'une desdites cellules, dite cellule de régulation de la charge de l'unité de stockage, à la régulation de la tension de ladite unité de stockage, ladite cellule de régulation de la tension de charge de l'unité de stockage étant à cet effet dans son deuxième état seulement lorsque le maintien d'une tension dite nominale de charge de l'unité de stockage requiert un apport de courant à partir de ladite cellule.

Grâce au dispositif selon l'invention, on peut réaliser non seulement la régulation fine de la tension délivrée au réseau d'utilisation, mais également celle de la charge de l'unité de stockage, et ce sans nécessiter l'utilisation de l'ordinateur de bord du satellite, c'est-à-dire que le dispositif selon l'invention est autonome pour ce qui est de la régulation et fiable.

L'invention repose en effet sur l'utilisation d'une deuxième cellule affectée à la régulation en plus de celle affectée à la régulation fine de la tension du bus, et de moyens de régulation spécifiques de la tension de charge de l'unité de stockage.

En outre, le dispositif selon l'invention est léger et donc peu coûteux à utiliser à bord d'un satellite où chaque gramme supplémentaire compte, car il peut se substituer à des unités électroniques de charge de batterie complexes, onéreuses et volumineuses.

De manière avantageuse, les moyens de régulation de la tension dudit bus et les moyens de régulation de la charge de ladite unité de stockage sont indépendants, et, lorsque les deux régulations convergent vers l'affectation d'une seule cellule à la fois à la régulation de la tension du bus et à la régulation de la charge de l'unité de stockage, la priorité est donnée à la régulation de la tension du bus. Ceci permet d'assurer quoi qu'il arrive l'alimentation régulée du réseau.

Selon un mode de réalisation préférentiel, les moyens de régulation de la tension du bus assurent la comparaison, au sein de chacune des cellules, entre une erreur moyenne sur la tension nominale du bus et une valeur de référence de l'erreur moyenne, cette valeur de référence étant constante au sein de chacune des cellules et croissante d'une cellule à l'autre, la valeur la plus faible étant celle de la cellule de régulation de la tension du bus. Ainsi, on évite mieux les situations de convergence entre les deux régulations mentionnées ci-dessus.

Dans ce cas, pour diminuer encore le risque de convergence, la régulation de la tension du bus débute par les cellules ayant la valeur de référence de l'erreur moyenne sur la tension nominale du bus la plus élevée.

Selon un autre mode de réalisation avantageux, les moyens de régulation de la charge de l'unité de stockage assurent la comparaison, au sein de chacune des cellules, entre une erreur moyenne sur la tension nominale de charge de l'unité de stockage et une valeur de référence de cette erreur moyenne, cette valeur de référence étant constante au sein de chacune des cellules et croissante d'une cellule à l'autre, la valeur la plus forte étant celle de la cellule de régulation de la charge de l'unité de stockage.

Ceci permet de réduire encore les risques de convergence entre les deux régulations.

Dans ce cas, pour diminuer encore le risque de convergence, la régulation de la charge de l'unité de stockage débute par les cellules ayant la valeur de référence de l'erreur moyenne sur la tension nominale de charge de l'unité de stockage la plus faible.

Les moyens de régulation de la tension du bus peuvent comprendre au sein de chacune des cellules un interrupteur shunt monté en parallèle sur chacune des cellules.

De façon similaire, les moyens de régulation de la charge de l'unité de stockage peuvent comprendre au sein de chacune des cellules un interrupteur série couplant l'unité de stockage au bus.

D'autres caractéristiques et avantages de la présente invention apparaîtront dans la description qui va suivre d'un mode de réalisation préféré de l'invention, donnée à titre illustratif et nullement limitatif.

Dans les figures suivantes :

- la figure 1 montre de manière très schématique la topologie d'un bus d'alimentation utilisé à bord d'un satellite,
- la figure 2 montre le schéma électrique d'une cellule d'un dispositif de régulation d'énergie électrique pour bus d'alimentation selon l'invention,
- la figure 3 montre le schéma électrique complet d'un dispositif selon l'invention comportant une pluralité de cellules identiques à celle de la figure 2.

Dans toutes ces figures, les éléments communs portent les mêmes numéros de référence.

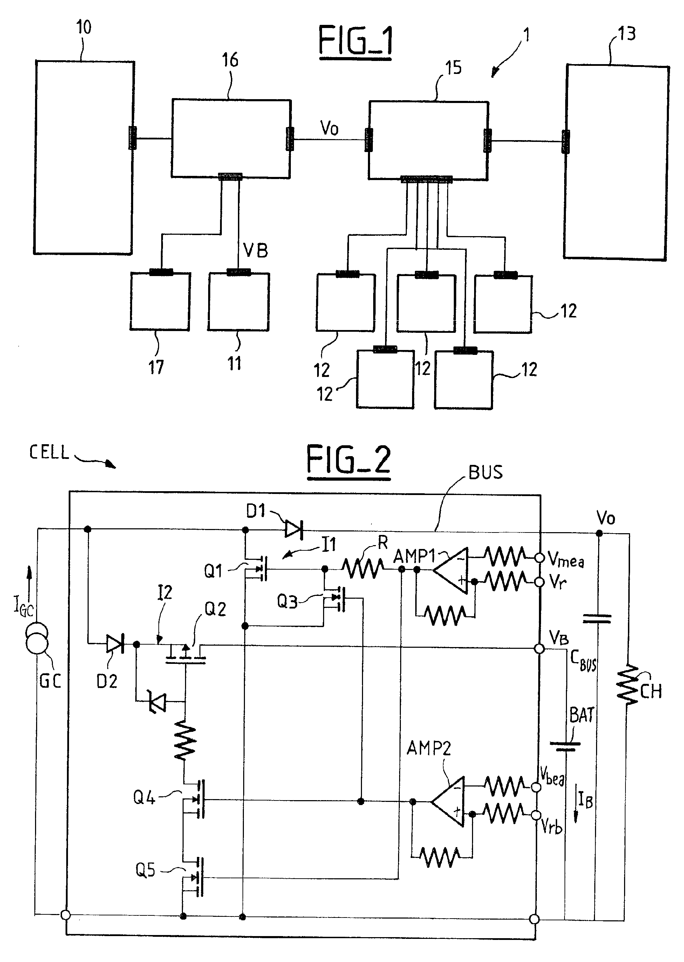

On voit en figure 1 la topologie d'un bus d'alimentation 1 utilisé à bord d'un satellite. De manière très schématique, ce bus d'alimentation 1 comporte un générateur solaire 10 utilisant l'énergie solaire récupérée à partir des panneaux solaires (non représentés) du satellite et une unité de stockage d'énergie sous la forme d'une batterie 11. Ces deux éléments forment la source d'alimentation en énergie électrique des différentes fonctions 12 embarquées à bord du satellite et nécessaires à son fonctionnement, telles que la propulsion, le contrôle d'attitude, la liaison avec la Terre, le contrôle thermique, etc..., et de la charge utile 13.

La distribution de cette énergie est assurée par une unité de distribution d'énergie 15 reliée à tous ces éléments et recevant une tension régulée $V_0$ provenant d'une d'unité de régulation d'énergie 16 elle-même reliée à la fois au générateur 10 et à la batterie 11.

La batterie 11 quant à elle possède une tension de charge $V_B$ et une unité de gestion de la batterie 17 assure la gestion de la batterie 11.

L'unité de régulation 16 est le coeur du bus d'alimentation 1 car elle permet de distribuer une tension stable et régulée $V_0$ au réseau comprenant les fonctions 12 embarquées à bord du satellite et la charge utile 13, et en outre elle contrôle les sources d'énergie 10 et 11.

La figure 2 montre le schéma électrique d'une cellule d'un dispositif de régulation d'énergie électrique pour bus d'alimentation selon l'invention.

Cette cellule CELL comporte un générateur de courant GC appartenant au générateur solaire. Un interrupteur shunt commandé I1 comprenant un transistor à effet de champ Q1 couplé à une diode D1 en opposition est monté en parallèle sur le générateur GC et appartient, comme on le verra plus loin, aux moyens de régulation de la tension du bus BUS. Le générateur de courant GC, qui délivre un courant $I_{GC}$, est couplé à un bus d'alimentation BUS par l'intermédiaire de la diode D1. Une unité de stockage d'énergie électrique BAT qui comporte au moins une batterie est couplée au bus BUS par l'intermédiaire d'un interrupteur série commandé 12 comprenant un transistor à effet de champ Q2 et une diode de protection D2. L'interrupteur I2 appartient, comme on le verra également plus loi, aux moyens de régulation de la charge de la batterie BAT.

Le bus BUS comporte de manière classique un élément capacitif $C_{BUS}$ et alimente une charge CH (le réseau d'utilisateurs).

De manière connue, la régulation de la tension délivrée au bus BUS à une valeur $V_0$ est assurée, grâce à l'interrupteur I1, par le passage de l'un à l'autre des trois états ci-dessous, à l'aide d'un asservissement générant un signal de commande $V_{mea}$ d'erreur moyenne sur la tension du bus BUS :

> *Etat 1 :* les interrupteurs I1 et I2 sont ouverts, le générateur GC alimente le bus BUS.
> *Etat 2 :* l'interrupteur I1 est ouvert et l'interrupteur I2 fermé, le générateur GC charge la batterie BAT.
> *Etat 3 :* l'interrupteur I1 est fermé et l'interrupteur I2 ouvert, rien n'est alimenté.

La décision sur la position des interrupteurs I1 et I2 est le résultat d'une comparaison de $V_{mea}$ avec une tension de référence $V_r$ effectuée au sein d'un amplificateur AMP1 faisant également partie des moyens de régulation de la tension du bus BUS.

On va maintenant expliquer l'invention dans son principe par son fonctionnement avec une seule cellule puis plusieurs, et l'on décrira ensuite le fonctionnement pratique du dispositif selon l'invention.

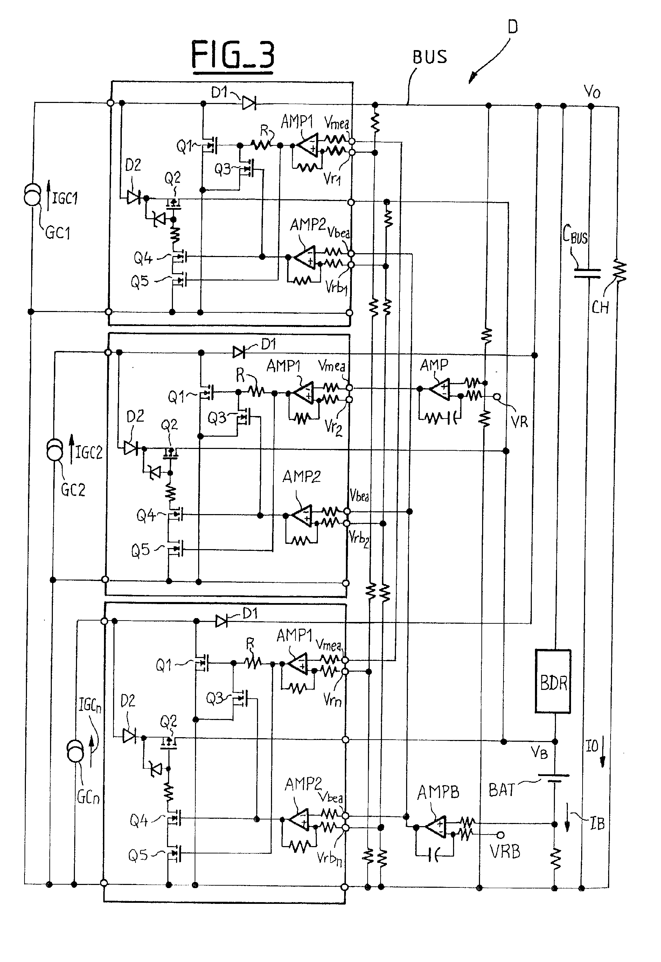

Un dispositif de régulation selon l'invention comporte une pluralité de cellules identiques à celle de la figure 2, comme cela est illustré en figure 3. La tension de référence $V_r$ est constante pour chaque cellule, mais varie d'une cellule à l'autre.

Pour bien comprendre le principe de fonctionnement de l'invention, on va d'abord décrire la régulation fine de la tension délivrée au bus BUS en l'absence de régulation de la charge de la batterie. La régulation fine de la tension délivrée au bus BUS est assurée par une seule des cellules, dite cellule de régulation de la tension du bus, dont l'interrupteur shunt I1 opère en régime dit « bang-bang ». En d'autres termes, quand la tension aux bornes de cette cellule dépasse la tension nominale $V_0$, l'interrupteur I1 de cette cellule est fermé, et dès que la tension aux bornes de cette cellule devient inférieure à la tension de référence $V_0$, cet interrupteur I1 est rouvert, de sorte que l'interrupteur I1 est ouvert seulement lorsque le maintien de la tension nominale requiert un apport de courant à partir de cette cellule. Cette cellule passe donc d'un état à l'autre de manière cyclique, d'où l'expression « bang-bang », avec un rapport cyclique D inférieur à 1.

De cette manière, avec n cellules du type de celle de la figure 1 délivrant chacune un courant $I_{GC}$, $I_0$ étant le courant requis par le réseau, on a alors :

$$I_0 = mI_{GC} + DI_{GC}$$

Il y a m cellules ayant leur interrupteur I1 ouvert, n-(m+1) cellules ayant leur interrupteur I1 fermé, et une cellule (la cellule de régulation de la tension du bus) opérant avec un rapport cyclique D entre ces deux états.

Si maintenant on effectue également la régulation de la charge de la batterie BAT, les m cellules utilisées pour la régulation de la tension du bus sont dans leur Etat 1 défini ci-dessus, et les n-(m+1) cellules non utilisées pour l'alimentation et la régulation de la tension du bus BUS peuvent être utilisées pour la charge de la batterie BAT.

Ainsi, le courant de charge de la batterie BAT est défini par le nombre de cellules dans leur Etat 2, prélevées parmi les n-(m+1).

Selon l'invention, la régulation fine du courant $I_B$ de la batterie BAT, qui permet de réaliser une partie de la charge de cette dernière à courant constant et une autre (la fin de la charge) à tension constante et donc à courant variable, est également assurée par une seule cellule, dite cellule de régulation de la charge de la batterie, opérant en régime « bang-bang » avec un rapport cyclique D' inférieur à 1.

L'interrupteur série I2 de cette cellule obéit ainsi à une consigne $V_{bea}$ issue d'un asservissement indépendant de celui de la régulation de la tension délivrée au bus BUS, et elle-même dépendante d'une référence de courant ou de tension selon la partie de la charge de la batterie BAT concernée. L'interrupteur I2 est ainsi soit en position fermée (Etat 2, courant du générateur GC alimentant la batterie BAT), soit en position ouverte (Etat 3, aucune alimentation), le choix de la position de l'interrupteur I2 étant le résultat d'une comparaison, au sein d'un amplificateur AMP2 de cette cellule (voir figure 2), faisant partie des moyens de régulation de la charge de la batterie BAT, de la tension $V_{bea}$ avec une tension de référence $V_{rb}$.

L'introduction selon l'invention de ce second asservissement implique une hiérarchisation des cellules qui est définie par les tensions $V_r$ et $V_{rb}$, constantes au sein de chaque cellule mais formant d'une cellule à l'autre une progression croissante.

Ainsi, la régulation de la tension délivrée au bus BUS implique les cellules situées sur la partie supérieure de l'échelle des tensions $V_r$. Au fur et à mesure que la tension $V_{mea}$ parcourt en décroissant la plage des tensions $V_r$, le signal de commande issu de l'amplificateur AMP1 des cellules concernées positionne dans leur Etat 2 les interrupteurs shunt I1. La cellule dont la tension de référence $V_r$ est la plus basse opère en régime « bang-bang » et constitue la cellule de régulation de la tension du bus.

La régulation du courant délivré à la batterie BAT, par l'intermédiaire de la commande $V_{bea}$ en progressant le long de l'échelle des tensions $V_{rb}$ commute les interrupteurs I2 en partant des cellules les plus basses dans la hiérarchie. La cellule dont la tension de référence $V_{rb}$ est la plus élevée opère en régime « bang-bang » et constitue la cellule de régulation de la charge de la batterie.

Les situations conflictuelles sont évitées car la cellule au potentiel $V_{rb}$ le plus élevé opère en régime « bang-bang ».

La situation conflictuelle existera pour un point de fonctionnement impliquant la même cellule pour les régimes « bang-bang ». Dans ce cas la priorité est donnée automatiquement, par exemple au moyen d'un circuit logique, à la régulation de la tension délivrée au bus BUS avec un rapport cyclique D. Le courant batterie ne sera plus régulé. Il sera régi par un rapport cyclique D' tel que:

$$D' = 1-D$$

Ainsi le courant batterie s'exprime par:

$$I_B = PI_{GC} + D'I_{GC}$$

où p est le nombre d'interrupteurs série I2 en position fermée (Etat 2), prélevés au sein des n-(m+1) disponibles.

En résumé, le dispositif selon l'invention comprenant n cellules a dans ce cas un point de fonctionnement correspondant à:

- m cellules dans l'Etat 1 (interrupteurs I1 et I2 ouverts)
- une cellule en régime « bang-bang » pour la régulation fine de $V_0$ avec l'interrupteur I2 correspondant en position ouverte
- p cellules dans l'Etat 2 (I1 ouvert et I2 fermé)
- une cellule en régime « bang-bang » pour la régulation fine de $I_B$
- n-p cellules dans leur Etat 3 (I1 fermé et I2 ouvert) ne délivrant aucune alimentation.

Ainsi, selon le principe général de l'invention qui vient d'être décrit, deux régulations indépendantes sont utilisées au niveau de chacune des cellules, et deux cellules opérant en régime « bang-bang » coexistent de manière autonome et indépendante, et lorsque les deux régulations convergent vers le fonctionnement d'une seule cellule en régime « bang-bang », la priorité est donnée automatiquement à la régulation de la tension délivrée au bus $V_0$. La charge de la batterie utilise l'énergie non utilisée par le réseau d'utilisateurs.

On va maintenant décrire en détail, en relation avec les figures 2 et 3, le fonctionnement du dispositif selon l'invention tout d'abord pour la régulation de la tension délivrée au bus BUS seule, puis pour la régulation de la charge de la batterie BAT seule.

Pour la régulation de la tension délivrée au bus BUS seule, si le point de fonctionnement impose le transfert d'énergie du générateur solaire GC vers la charge CH, la régulation est telle que l'amplificateur AMP1 transmet un signal de commande nul vers le transistor Q1 pour le forcer en position ouverte. Dans le même temps ce signal nul est appliqué sur la porte d'un transistor Q5 qui se met également en position ouverte forçant le transistor Q2 en position ouverte quelle que soit la valeur du signal de commande issu de l'amplificateur AMP2, isolant ainsi le générateur GC de la batterie BAT. Le générateur GC se polarise à la tension $V_0+V_{D1}$ puisque la diode D1 est passante et un courant $I_{GC}$ est transféré vers la charge CH. Ce fonctionnement est identique lorsque la cellule opère en régime « bang-bang ».

Pour la régulation de la charge de la batterie BAT, dans le cas où un transfert d'énergie vers la batterie est demandé, l'amplificateur AMP2 transmet un signal de commande de tension élevée (niveau logique 1) sur la porte d'un transistor Q4 qui se met en position fermée. L'amplificateur AMP1 transmet également un signal de commande de potentiel élevé (donc de niveau logique 1). Ce potentiel est également appliqué au transistor Q5 qui devient passant. Il s'ensuit la mise en conduction de Q2. Le générateur solaire est maintenant polarisé à la tension $V_B+V_{D2}$ et délivre un courant $I_{GC}$ à la batterie BAT.

Le fonctionnement fiable de la cellule exige que Q1 qui est nominalement en position fermée lorsque la régulation effectuée par l'amplificateur AMP1 n'exige pas d'énergie vers le réseau passe en position ouverte quand la section batterie est sollicitée. Cette condition est satisfaite en appliquant un niveau 1 sur la porte de Q3 qui force le blocage de Q1, ce qui est réalisé par la liaison électrique de la porte de Q3 avec AMP2. La résistance R permet de satisfaire cette condition, le courant issu de AMP1 est alors drainé par le transistor Q3. Le fonctionnement est inchangé lorsque la cellule opère en régime « bang-bang », le transistor Q2 suivant les commandes variables issues de l'amplificateur AMP2.

On voit en figure 3 le schéma électrique d'un dispositif de régulation D selon l'invention comprenant n cellules identiques à celle de la figure 2 (la représentation a été limitée à 3 cellules car elles sont toutes identiques). Un module déchargeur de batterie (BDR), classique, doit fournir une tension réseau régulée.

Dans ce dispositif, deux amplificateurs AMP et AMPB sont connectés à des tensions de référence $V_R$ et $V_{RB}$ respectivement pour la tension réseau et la tension batterie. Les sorties amplifiées de ces amplificateurs AMP et AMPB, constituées respectivement par les signaux de commande $V_{mea}$ et $V_{bea}$, sont transmises à toutes les cellules. Ainsi, l'asservissement utilise un signal de commande distribué simultanément à toutes les cellules. A l'intérieur de ces cellules, ces signaux de commande sont, comme on l'a vu plus haut, comparés à des tensions de références discrètes $V_{rn}$ et $V_{rbn}$ (les indices n marquent le rang de la cellule considérée), distribuées, à l'aide de ponts résistifs, selon une loi récurrente. Ces comparaisons génèrent à partir des amplificateurs à contre-réaction positive AMP1 et AMP2 de chaque cellule, des tensions discrètes qui sont assimilables à des niveaux logiques. Le cheminement de ces signaux logiques a été décrit en détail ci-dessus.

Bien entendu, l'invention n'est pas limitée au mode de réalisation qui vient d'être décrit.

Ainsi, la mise en pratique de son principe général peut être effectuée au moyen de tout dispositif électronique adéquat, pas nécessairement du type de celui présenté aux figures 2 et 3.

Enfin, on pourra remplacer tout moyen par un moyen équivalent sans sortir du cadre de l'invention.

**Revendications**

1. Dispositif de régulation d'énergie électrique pour un bus d'alimentation (BUS) relié à un réseau d'utilisation (CH) de ladite énergie électrique, ledit dispositif comprenant :

   • une unité de stockage d'énergie électrique (BAT)
   • un générateur solaire comprenant une pluralité de cellules (GC1, ..., GCn)
   • pour chacune desdites cellules, des moyens de régulation (D1, Q1, AMP1) de la tension d'alimentation dudit bus permettant d'imposer à ladite cellule l'un des trois états de fonctionnement suivants :

   - un premier état dans lequel le courant de ladite cellule alimente ledit bus (BUS)
   - un deuxième état dans lequel le courant de ladite cellule alimente ladite unité de stockage (BAT)
   - un troisième état dans lequel ladite cellule est shuntée

   lesdites cellules étant réparties par lesdits moyens de régulation (D1, Q1/ AMP1) de la tension du bus en au moins deux groupes :

   - un premier groupe dans lequel au moins l'une desdites cellules alimente ledit bus et l'une desdites cellules, dite cellule de régulation de la tension du bus, est affectée à la régulation de la tension dudit bus et est à cet effet dans son premier état seulement lorsque le maintien d'une tension dite nominale de bus requiert un apport de courant à partir de ladite cellule
   - un deuxième groupe dans lequel au moins l'une desdites cellules est soit dans son deuxième état, soit dans son troisième état, en fonction d'un niveau de courant de charge requis de ladite unité de stockage (BAT), le nombre de cellules dans le deuxième état étant fonction de la valeur de courant de charge requis

   **caractérisé en ce que** ledit dispositif comprend en outre des moyens de régulation (D2, Q2, AMP2) de la charge de ladite unité de stockage (BAT) pour affecter, parmi lesdites cellules dudit deuxième groupe, au moins l'une desdites cellules à l'alimentation de ladite unité de stockage (BAT) et l'une desdites cellules, dite cellule de régulation de la charge de l'unité de stockage, à la régulation de la tension de ladite unité de stockage, ladite cellule de régulation de la tension de charge de l'unité de stockage étant à cet effet dans son deuxième état seulement lorsque le maintien d'une tension dite nominale de charge de l'unité de stockage requiert un apport de courant à partir de ladite cellule.

2. Dispositif selon la revendication 1 **caractérisé en ce que** lesdits moyens de régulation de la tension dudit bus (D1, Q1, AMP1) et lesdits moyens de régulation de la charge de ladite unité de stockage (D2, Q2, AMP2) sont indépendants, et **en ce que**, lorsque les deux régulations convergent vers l'affectation d'une seule cellule à la fois à la régulation de la tension dudit bus et à la régulation de la charge de ladite unité de stockage, la priorité est donnée à la régulation de la tension dudit bus.

3.  Dispositif selon l'une des revendications 1 ou 2 **caractérisé en ce que** lesdits moyens de régulation de la tension du bus (D1, Q1, AMP1) assurent la comparaison, au sein de chacune desdites cellules, entre, une erreur moyenne sur la tension nominale dudit bus (Vmea) et une valeur de référence de ladite erreur moyenne ($Vr_1$, $Vr_2$, ..., $Vr_n$), ladite valeur de référence étant constante au sein de chacune desdites cellules et croissante d'une cellule à l'autre, la valeur la plus faible étant celle de ladite cellule de régulation de la tension du bus.

4.  Dispositif selon la revendication 3 **caractérisé en ce que** la régulation de la tension du bus débute par les cellules ayant ladite valeur de référence de ladite erreur moyenne sur la tension nominale dudit bus ($Vr_1$, $Vr_2$, ..., $Vr_n$) la plus élevée.

5.  Dispositif selon l'une des revendications 1 à 4 **caractérisé en ce que** lesdits moyens de régulation de la charge de l'unité de stockage (D2, Q2, AMP2) assurent la comparaison, au sein de chacune desdites cellules, entre une erreur moyenne sur la tension nominale de charge de ladite unité de stockage (Vbea) et une valeur de référence de ladite erreur moyenne ($Vrb_1$, $Vrb_2$, ..., $Vrb_n$), ladite valeur de référence étant constante au sein de chacune desdites cellules et croissante d'une cellule à l'autre, la valeur la plus forte étant celle de ladite cellule de régulation de la charge de l'unité de stockage.

6.  Dispositif selon la revendication 5 **caractérisé en ce que** la régulation de la charge de l'unité de stockage débute par les cellules ayant ladite valeur de référence de ladite erreur moyenne sur la tension nominale de charge de l'unité de stockage ($Vrb_1$, $Vrb_2$, ..., $Vrb_n$) la plus faible.

7.  Dispositif selon l'une des revendications 1 à 6 **caractérisé en ce que** lesdits moyens de régulation de la tension du bus comprennent au sein de chacune desdites cellules un interrupteur shunt (D1, Q1) monté en parallèle sur chacune desdites cellules.

8.  Dispositif selon l'une des revendications 1 à 7 **caractérisé en ce que** lesdits moyens de régulation de la charge de l'unité de stockage comprennent au sein de chacune desdites cellules un interrupteur série (D2, Q2) couplant ladite unité de stockage audit bus.

# FIG_1

# FIG_2

# FIG_3

## RAPPORT DE RECHERCHE EUROPEENNE

**Office européen des brevets**

Numéro de la demande

EP 02 29 1674

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 181 115 B1 (PEROL ET AL.) 30 janvier 2001 (2001-01-30) * colonne 1, ligne 44 - colonne 2, ligne 51 * * colonne 5, ligne 26-67; figures 5,6 * | 1,7,8 | H02J7/35 |
| D,A | & FR 2 785 103 A (ORGANISATION INTERGOUVERNEMENT) 28 avril 2000 (2000-04-28) --- | 1,7,8 | |
| A | US 6 157 161 A (CANTER ET AL.) 5 décembre 2000 (2000-12-05) * abrégé * * colonne 2, ligne 23-65; figure 1 * --- | 1 | |
| A | US 5 530 335 A (DECKER ET AL.) 25 juin 1996 (1996-06-25) * abrégé * * colonne 3, ligne 56 - colonne 6, ligne 19; figure 1 * ----- | 1 | |

**DOMAINES TECHNIQUES RECHERCHES (Int.Cl.7)**

H02J

Le présent rapport a été établi pour toutes les revendications

| Lieu de la recherche | Date d'achèvement de la recherche | Examinateur |
|---|---|---|
| BERLIN | 11 novembre 2002 | Beitner, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 02 29 1674

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-11-2002

| Document brevet cité au rapport de recherche | | Date de publication | Membre(s) de la famille de brevet(s) | | Date de publication |
|---|---|---|---|---|---|
| US 6181115 | B1 | 30-01-2001 | FR JP | 2785103 A1 2000134824 A | 28-04-2000 12-05-2000 |
| US 6157161 | A | 05-12-2000 | EP JP | 1073176 A2 2001045676 A | 31-01-2001 16-02-2001 |
| US 5530335 | A | 25-06-1996 | US | 5648731 A | 15-07-1997 |

EPO FORM P0460

Pour tout renseignement concernant cette annexe : voir Journal Officiel de l'Office européen des brevets, No.12/82